# FASCICULE DE BREVET EUROPEEN

(11) **EP 2 442 190 B1**
(45) Date de publication et mention de la délivrance du brevet: **09.11.2016**
(21) Numéro de dépôt: 11181651.8
(22) Date de dépôt: 16.09.2011
(51) Int. Cl.: G04B 13/02, G04B 15/14, G04B 17/32

(54) **Assemblage d'une pièce ne comportant pas de domaine plastique**
Zusammenbau eines Teils, das keinen Plastikbereich enthält
Assembly of a part not comprising a plastic range

(30) Priorité: 15.10.2010 EP 10187740
(43) Date de publication de la demande: 18.04.2012
(73) Titulaire: ETA SA Manufacture Horlogère Suisse, 2540 Grenchen (CH)
(72) Inventeur: Conus, Thierry, 2543 Lengnau (CH); Verardo, Marco, 2336 Les Bois (CH); Kohler, Frédéric, 1752 Villars-sur-Glâne (CH); Saglini, Igor, 2063 Fénin (CH); Cabezas Jurin, Andrés, 1400 Yverdon (CH); Jacot, Jacques, 2046 Fontaines (CH); Perret-Gentil, Maxence, 2720 Tramelan (CH)
(74) Mandataire: Couillard, Yann Luc Raymond

(56) Documents cités:
- EP-A1- 1 445 670
- EP-A1- 1 826 634
- EP-A1- 1 850 193
- EP-A1- 2 230 572
- EP-A2- 1 708 045
- CH-A2- 699 680
- FR-A- 1 427 115
- JP-U- 54 141 964

## Description

### Domaine de l'invention

L'invention se rapporte à un assemblage d'une pièce dont le matériau ne comporte pas de domaine plastique avec un organe comportant un autre type de matériau.

### Arrière plan de l'invention

Les assemblages actuels comportant une pièce à base de silicium sont généralement solidarisés par collage. Cependant, le collage n'est pas satisfaisant quant à sa tenue dans le temps. De plus, l'opération nécessite une extrême finesse d'application ce qui la rend coûteuse.

Le document EP 1 850 193 divulgue une première pièce faite à base silicium qui est assemblée sur un axe en métal à l'aide d'une pièce intermédiaire métallique. Toutefois, les variantes de forme proposées dans ce document ne sont pas satisfaisantes et, soit, entraînent le bris de la pièce à base de silicium lors de son assemblage, soit, solidarisent insuffisamment les pièces entre elles.

### Résumé de l'invention

Le but de la présente invention est de pallier tout ou partie les inconvénients cités précédemment en proposant un assemblage sans colle capable de solidariser une pièce dont le matériau ne comporte pas de domaine plastique avec un organe comportant un matériau ductile comme, par exemple, un métal ou un alliage métallique.

A cet effet, l'invention se rapporte à un dispositif d'assemblage d'un organe en un premier matériau dans l'ouverture circulaire d'une pièce en un deuxième matériau à base de silicium à l'aide d'une partie ladite pièce caractérisé en ce que la partie intermédiaire est un cylindre continu comportant une lumière destinée à recevoir ledit organe afin que la partie intermédiaire absorbe radialement et uniformément par déformation élastique et/ou plastique au moins une partie de l'effort de chassage axial dudit organe dans ladite lumière et en ce que la pièce comporte des ajourages formant des moyens de déformations élastiques distribués autour de son ouverture circulaire destinés à absorber lesdits efforts radiaux non absorbés par la partie intermédiaire afin de solidariser l'assemblage de manière non destructive pour ladite pièce.

Cette configuration permet avantageusement de solidariser l'ensemble pièce - partie intermédiaire - organe sans collage avec un organe habituel à la précision maîtrisée tout en garantissant que la pièce ne subisse pas d'efforts destructifs même si elle est formée, par exemple, à partir de silicium.

Conformément à d'autres caractéristiques avantageuses de l'invention :
- les ajourages sont formés à distance et autour de l'ouverture circulaire par deux séries de trous en forme de losange distribuées en quinconce afin de former des poutres réparties en V sécants ;
- les ajourages comportent, entre les deux premières séries et l'ouverture circulaire, une troisième série qui est formée de trous en forme de losange et distribuée en quinconce avec l'une des deux premières séries afin de former des poutres réparties en X sécants ;
- la pièce comporte des fentes permettant de faire communiquer la troisième série de trous avec l'ouverture circulaire ;
- les ajourages sont formés à distance et autour de l'ouverture circulaire par une première série de trous oblongues distribuée en quinconce avec une deuxième série de trous de forme triangulaire, la deuxième série étant la plus proche de l'ouverture circulaire, chaque trou de forme triangulaire communiquant avec l'ouverture circulaire par une entaille afin de former des poutres mobiles radialement selon l'épaisseur des trous oblongues ;
- les ajourages comportent une troisième série de trous en forme de triangle, chaque trou de la troisième série étant distribué entre deux trous de forme triangulaire de la deuxième série et communiquant avec l'ouverture circulaire par une fente afin de former des poutres à deux bras indépendants mobiles radialement selon l'épaisseur des trous oblongues et tangentiellement selon l'épaisseur des fentes ;
- les séries de trous s'étendent sur une largeur comprise entre 100 µm et 500 µm à partir du bord de l'ouverture circulaire ;
- l'ouverture circulaire comporte un diamètre compris entre 0,5 et 2 mm.

De plus, l'invention se rapporte à une pièce d'horlogerie caractérisée en ce qu'elle comporte un dispositif d'assemblage selon l'une des variantes précédentes.

Enfin, l'invention se rapporte à un procédé d'assemblage par chassage axial d'un organe en un premier matériau dans une pièce en un deuxième matériau à base de silicium comportant les étapes suivantes :
a) former la pièce avec une ouverture circulaire et des ajourages distribués autour de l'ouverture circulaire destinés à former des moyens de déformation élastique ;
b) introduire sans contrainte dans l'ouverture circulaire une partie intermédiaire en un troisième matériau en forme de cylindre continu comportant une lumière ;
c) dudgeonner élastiquement et/ou plastiquement la partie intermédiaire par sa lumière à l'aide dudit organe afin d'exercer une contrainte radiale uniforme contre la paroi de la pièce autour de ladite ouverture circulaire en sollicitant lesdits moyens de déformation élastique de la pièce.

Ce procédé permet avantageusement de chasser l'organe axialement sans qu'aucun effort axial ne soit appliqué sur la pièce. En effet, de manière avantageuse selon l'invention, seule une déformation élastique uniforme et radiale est appliquée sur la pièce. Enfin, un tel procédé permet de solidariser l'ensemble pièce - partie intermédiaire - organe en s'adaptant aux dispersions de fabrication des différents constituants.

Conformément à d'autres caractéristiques avantageuses de l'invention :
- lors de l'étape b), la différence entre le diamètre de l'ouverture circulaire et la section extérieure de la partie intermédiaire ;
- lors de l'étape c), le dudgeonnage exerce un serrage compris entre 8 et 20 µm ;
- lors des étapes b) et c), la partie intermédiaire est maintenue dans l'ouverture circulaire à l'aide d'une portée ;
- le deuxième matériau à base de silicium comporte du silicium, du quartz, du corindon ou de la céramique ;
- le troisième matériau est formé à base de métal ou d'alliage métallique ;
- la pièce peut être, par exemple, un mobile d'horlogerie, une ancre d'horlogerie, un spiral d'horlogerie, un résonateur ou encore un MEMS.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une vue schématique partielle d'un mouvement horloger comportant trois assemblages selon l'invention ;
- la figure 2 est une vue partielle agrandie de la figure 1 ;
- les figures 3 à 6 sont des vues de variantes selon un premier mode de réalisation de moyens à déformation élastique selon l'invention ;
- les figures 7 et 8 sont des vues de variantes selon un deuxième mode de réalisation de moyens à déformation élastique selon l'invention ;

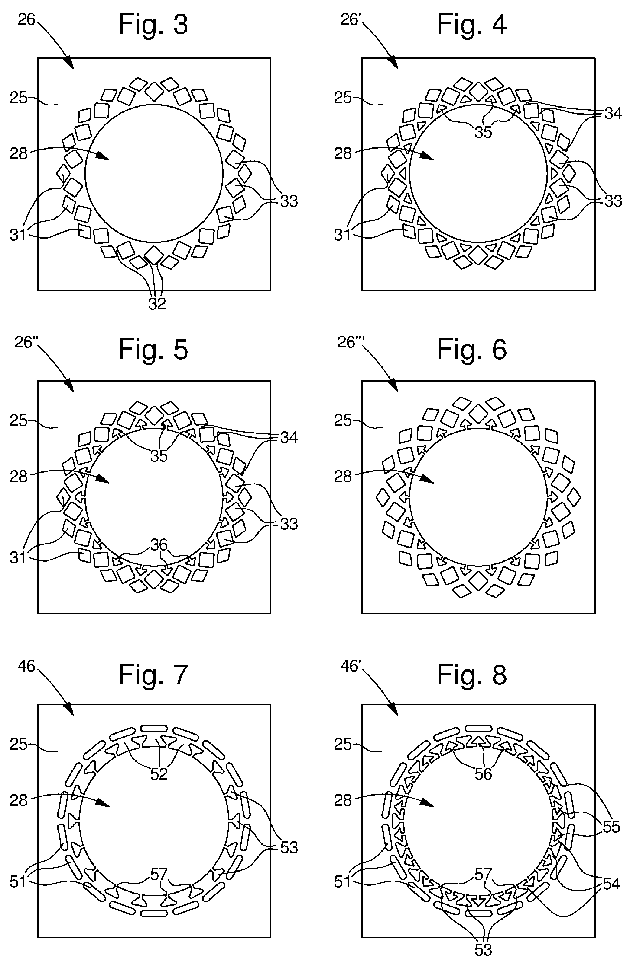

- les figures 7 et 8 sont des vues de variantes selon un deuxième mode de réalisation de moyens à déformation élastique selon l'invention ;

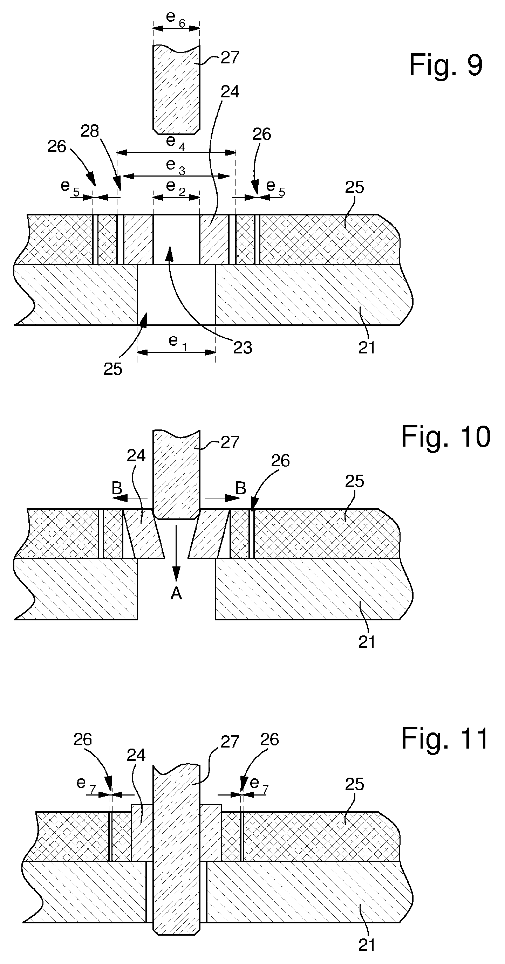

- les figures 9 à 11 sont des représentations schématiques d'étapes successives du procédé d'assemblage selon l'invention ;

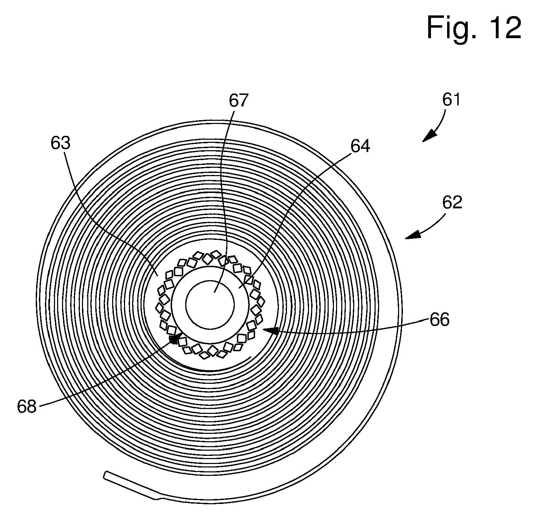

- la figure 12 est une vue schématique partielle d'un spiral horloger comportant un assemblage selon l'invention.

### Description détaillée des modes de réalisation préférés

Comme expliqué ci-dessus, l'invention se rapporte à un assemblage et son procédé destinés à solidariser un matériau fragile, c'est-à-dire ne comportant pas de domaine plastique comme un matériau à base de silicium, avec un matériau ductile comme un métal ou un alliage métallique.

Cet assemblage a été imaginé pour des applications dans le domaine horloger. Toutefois, d'autres domaines peuvent parfaitement être imaginés comme notamment l'aéronautique, la bijouterie, l'automobile ou les arts de la table.

Dans le domaine horloger, cet assemblage est rendu nécessaire par la part croissante que tiennent les matériaux fragiles comme ceux à base de silicium, de quartz, de corindon ou plus généralement de céramique. On peut à titre d'exemple envisager de former le spiral, le balancier, l'ancre, les ponts ou même les mobiles comme les roues d'échappement totalement ou partiellement à base de silicium. Toutefois, le fait de toujours pouvoir utiliser des axes habituels en acier dont la fabrication est maîtrisée, est une contrainte qui est difficile à concilier avec l'utilisation de pièces ne comportant pas de domaine plastique. En effet, le chassage d'un axe en acier est impossible et brise systématiquement les pièces fragiles, c'est-à-dire ne comportant pas de domaine plastique.

C'est pourquoi, l'invention se rapporte à un assemblage par chassage axial d'un organe en un premier matériau, par exemple ductile comme l'acier, dans l'ouverture circulaire d'une pièce en un deuxième matériau ne comportant pas de domaine plastique, comme un matériau à base de silicium, à l'aide d'une partie intermédiaire, en un troisième matériau plus ductile que le premier matériau, qui est montée entre ledit organe et ladite pièce.

Selon l'invention, la partie intermédiaire est un cylindre continu comportant une lumière destinée à recevoir ledit organe afin que la partie intermédiaire absorbe radialement et uniformément par déformation élastique et/ou plastique une partie de l'effort de chassage axial dudit organe. En effet, lors des recherches effectuées, il est apparu que la partie intermédiaire devait répartir de manière uniforme les contraintes radiales induites par son dudgeonnage sur sa paroi autour de l'ouverture circulaire.

Par conséquent, un cylindre continu, c'est-à-dire sans fente radiale ou ajourage axial, est rendu nécessaire pour éviter les contraintes localisées sur une partie de la paroi de l'ouverture de la pièce fragile qui sont propres à briser cette dernière.

Cette interprétation justifie également la non-utilisation d'une collerette sur la partie supérieure ou inférieure du cylindre continu. En effet, lors du dudgeonnage, une telle collerette transmet une partie de l'effort axial de l'organe sur le dessus (ou le dessous) de la pièce fragile. Dès lors, le cisaillement exercé notamment par les coins de la collerette sur le dessus (ou le dessous) de la pièce fragile engendre de la même manière des contraintes localisées propres à briser la pièce fragile.

Par conséquent, le cylindre continu comportant une lumière peut s'interpréter, si la section du cylindre est circulaire, comme un anneau plein dont les parois interne et externe sont continues, c'est-à-dire sans rainure ou plus généralement de discontinuité de matière. Le cylindre continu permet donc de générer uniquement une contrainte radiale uniforme par déformation élastique et/ou plastique sur la paroi autour de l'ouverture circulaire sans qu'un sens de chassage axial de l'organe soit obligatoirement respecté.

De plus, la pièce comporte des ajourages formant des moyens de déformation élastique qui sont distribués autour et à distance de son ouverture circulaire et qui sont destinés à absorber lesdits efforts radiaux non absorbés par la partie intermédiaire afin de solidariser l'assemblage de manière non destructive pour ladite pièce. La déformation élastique de la pièce fragile grâce à ses ajourages permet donc de solidariser la pièce fragile avec l'ensemble partie intermédiaire - organe rendu solidaire par la déformation plastique du cylindre continu.

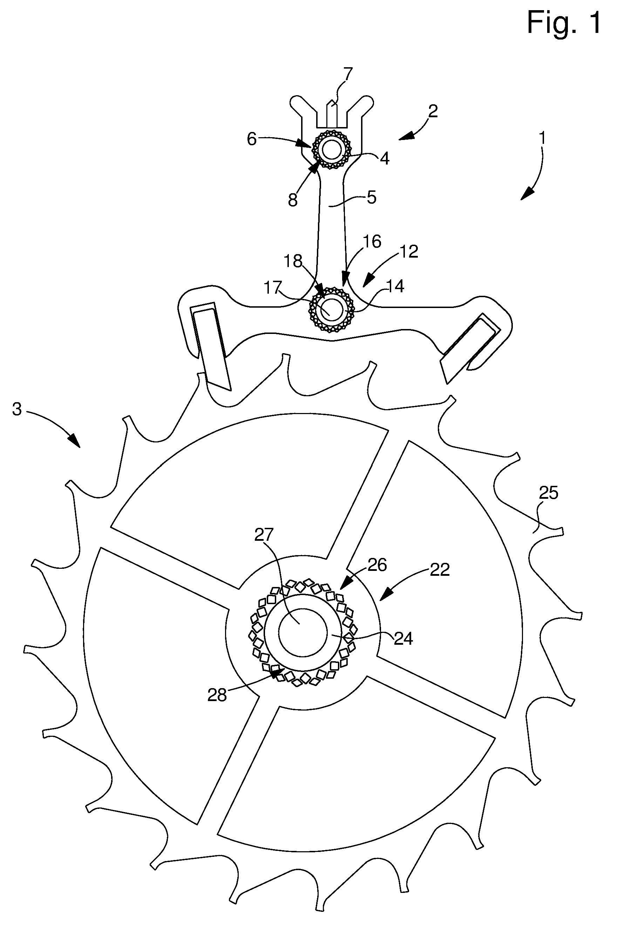

L'assemblage selon l'invention sera mieux compris en relation avec les figures 1 à 8 présentant des exemples d'applications dans le domaine de l'horlogerie. On peut voir à la figure 1, un système d'échappement horloger comportant une ancre 1 et une roue d'échappement 3.

L'ancre 1 à titre d'exemple comporte deux assemblages 2, 12 selon l'invention destinés respectivement à solidariser le dard 7 et l'axe de pivotement 17 avec sa baguette 5. Comme visible à la figure 1, chaque assemblage 2, 12 comporte une partie intermédiaire 4, 14 en forme d'anneau plein coopérant entre le dard 7 ou l'axe de pivotement 17 et la baguette 5 de l'ancre 1. De plus, chaque assemblage 2, 12 comporte des ajourages 6, 16 réalisés dans la baguette 5 autour d'une ouverture circulaire 8, 18 et qui sont destinés à former des moyens de déformation élastique. On comprend donc que l'assemblage 2, 12 est suffisamment résistant pour ne pas générer de mouvements relatifs entre ses constituants.

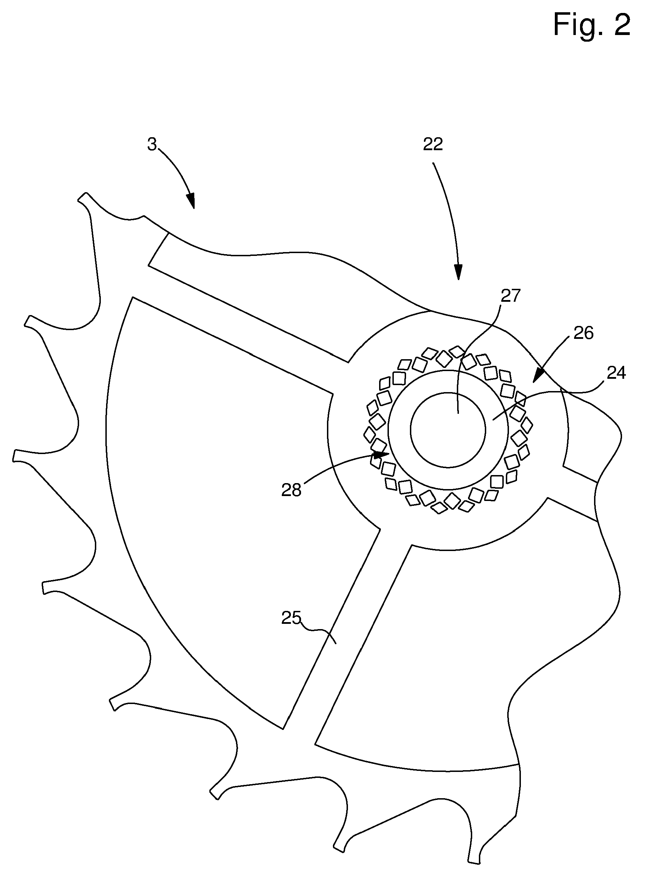

La roue d'échappement 3, et plus généralement le mobile 3, comporte, à titre d'exemple, un assemblage 22 destiné respectivement à solidariser l'axe de pivotement 27 avec le corps 25 de la roue 3. Comme visible aux figures 1 et 2, l'assemblage 22 comporte une partie intermédiaire 24 en forme d'anneau plein coopérant entre l'axe de pivotement 27 et le corps 25 de la roue 3. De plus, l'assemblage 22 comporte des ajourages 26 réalisés dans le moyeu autour d'une ouverture circulaire 28 de la roue 3 et qui sont destinés à former des moyens de déformation élastique.

On comprend donc immédiatement que l'exemple de l'assemblage 22 peut s'appliquer à tout type de mobile. De plus, le pivot 27 peut comporter en une seule pièce un pignon afin de former le mobile fini.

Des exemples d'ajourages sont présentés aux figures 3 à 8. Selon un premier mode de réalisation illustré aux figures 3 à 6, les ajourages sont formés à distance et autour de l'ouverture circulaire par deux séries de trous en forme de losange distribuées en quinconce afin de former des poutres réparties en V sécants.

La figure 3 est une représentation des ajourages 6, 16, 26 des figures 1 et 2. Pour plus de simplicité, seules les références de la roue 3 sont reprises à la figure 3. Cette dernière montre des ajourages 26 qui, préférentiellement, traversent totalement l'épaisseur du corps 25 en matériau fragile. Les ajourages 26 sont distribués à distance et autour de l'ouverture circulaire 28 formée, de manière préférée, également totalement traversant dans l'épaisseur du corps 25 en matériau fragile.

Comme visible à la figure 3, les ajourages 26 forment une première série de trous 31, les plus éloignés de l'ouverture 28, et une deuxième série de trous 33 qui sont en forme de losange et distribuées en quinconce. On s'aperçoit à la figure 3 que les ajourages 31, 33 forment ainsi des poutres 32 en forme de V qui sont sécantes entre elles.

Dans une première variante du premier mode de réalisation illustrée à la figure 4, les ajourages 26' reprennent les première et deuxième séries de trous 31, 33 avec, en plus, une troisième série qui, formée de trous 35 en forme de losange, est située entre les deux premières séries et l'ouverture circulaire 28, c'est-à-dire la plus proche de l'ouverture 28. Comme visible à la figure 4, la troisième série de trous 35 est distribuée en quinconce avec l'une 33 des deux premières séries afin de former des poutres 34 réparties en X sécants.

Dans une deuxième variante du premier mode de réalisation illustrée à la figure 5, les ajourages 26" reprennent les ajourages 26' de la figure 4 avec, en plus, des fentes 36 permettant de faire communiquer la troisième série de trous 35 avec l'ouverture circulaire 28.

Avantageusement selon l'invention, les trous 31, 33 et 35 et les fentes 36 sont utilisés pour former des moyens de déformation élastique aptes à absorber des contraintes radiales, c'est-à-dire des efforts exercés du centre de l'ouverture circulaire 28 vers la paroi du corps 25 entourant ladite ouverture circulaire.

Bien entendu, les deux ou trois séries peuvent être plus ou moins rapprochées les unes des autres et/ou de formes différentes et/ou de dimensions différentes en fonction du débattement maximal souhaité et de la contrainte voulue pour déformer les poutres 32, 34.

A titre d'exemple, une alternative à la figure 5 est présentée à la figure 6. On peut voir que les ajourages 26'" sont similaires à ceux 26" de la figure 5, toutefois, les trois séries de trous sont plus espacées les unes des autres. De plus, il est visible que les formes et dimensions aussi bien des trous que des fentes sont différentes. On comprend donc que l'alternative de la figure 6 modifie la rigidité des moyens de déformations élastiques dans le silicium.

Préférentiellement, les ajourages 26, 26', 26", 26'" s'étendent sur une largeur comprise entre 100 µm et 500 µm à partir du bord de l'ouverture circulaire 28. De plus, les fentes 36 sont comprises entre 15 µm et 40 µm. Enfin, de manière préférée, le diamètre de l'ouverture circulaire 28 est compris entre 0,5 et 2 mm.

Selon un deuxième mode de réalisation illustré aux figures 7 et 8, les ajourages sont formés à distance et autour de l'ouverture circulaire par une première série de trous oblongues distribuée en quinconce avec une deuxième série de trous de forme triangulaire, la deuxième série étant la plus proche de l'ouverture circulaire, chaque trou de forme triangulaire communiquant avec l'ouverture circulaire par une entaille afin de former des poutres mobiles radialement selon l'épaisseur des trous oblongues.

Ainsi, la figure 7 montre des ajourages 46 qui, préférentiellement, traversent totalement l'épaisseur du corps 25 en matériau fragile. Les ajourages 46 sont distribués à distance et autour de l'ouverture circulaire 28 formée, de manière préférée, également totalement traversant dans l'épaisseur du corps 25 en matériau fragile.

Comme visible à la figure 7, les ajourages 46 forment une première série de trous oblongues 51 et une deuxième série de trous 53 de forme triangulaire. Selon le deuxième mode de réalisation, les deux séries de trous 51, 53 sont distribuées en quinconce.

De plus, chaque trou 53 de forme triangulaire communique avec l'ouverture circulaire 28 par une entaille 57. On s'aperçoit à la figure 7 que les ajourages 46 forment ainsi des poutres 52 en forme de trapèze qui sont séparées entre elles par les entailles 57. On remarque également que chaque poutre 52 est centrée sur un trou oblongue 51 ce qui rend chaque poutre 52 mobile radialement selon l'épaisseur d'un trou oblongue 51.

Dans une variante du deuxième mode de réalisation illustrée à la figure 8, les ajourages 46' reprennent les ajourages 46 de la figure 7 avec, en plus, une troisième série de trous 55 en forme de triangle. De plus, chaque trou 55 de la troisième série est distribué entre deux trous 53 de forme triangulaire de la deuxième série et communique avec l'ouverture circulaire 28 par une fente 56. Les ajourages 46' forment ainsi des poutres 54 à deux bras indépendants symétriques et sensiblement en forme de L qui sont mobiles radialement selon l'épaisseur des trous 51 oblongues et tangentiellement selon l'épaisseur des fentes 56.

Bien entendu, comme pour le premier mode de réalisation, les deux ou trois séries peuvent être plus ou moins rapprochées les unes des autres et/ou de formes différentes et/ou de dimensions différentes en fonction du débattement maximal souhaité et de la contrainte voulue pour déformer les poutres 52, 54.

Préférentiellement, les ajourages 46, 46' s'étendent sur une largeur comprise entre 100 µm et 500 µm à partir du bord de l'ouverture circulaire 28. De plus, les fentes 56 ou entailles 57 sont comprises entre 15 µm et 40 µm. Enfin, de manière préférée, le diamètre de l'ouverture circulaire 28 est compris entre 0,5 et 2 mm.

Le procédé d'assemblage va maintenant être expliqué en relation avec les figures schématiques 9 à 11. Pour plus de simplicité, seules les références de la roue 3 sont reprises aux figures 9 à 11. Selon l'invention, une première étape consiste à former la pièce 3 en un matériau n'ayant pas de domaine plastique avec une ouverture 28 circulaire et des ajourages 26 distribués autour de l'ouverture circulaire 28 destinés à former des moyens de déformation élastique selon, par exemple, les modes de réalisation expliqués ci-dessus. Comme visible à la figure 9, l'ouverture circulaire 28 comporte un diamètre e₄ et les ajourages 26 comprennent notamment des trous de section e₅.

Une telle étape peut être réalisée par gravage sous forme sèche ou humide comme, par exemple, un gravage ionique réactif profond (également connu sous l'abréviation anglaise « DRIE »).

De plus, dans une deuxième étape, le procédé consiste à former l'axe de pivotement 27 en un deuxième matériau avec une section maximale e₆. Comme expliqué ci-dessus, la deuxième étape peut être réalisée selon les processus habituels de fabrication d'axes. L'axe 27 est préférentiellement métallique et peut par exemple être formé en acier.

Le procédé, dans une troisième étape, consiste à former la partie intermédiaire 24 en un troisième matériau en forme de cylindre continu avec une lumière 23 de section interne e₂ et de section externe e₃. La troisième étape peut ainsi être réalisée à partir d'un usinage habituel ou d'un électroformage. La partie intermédiaire 24 peut ainsi comporter une épaisseur comprise entre 100 et 300 µm et une largeur l, c'est-à-dire la section externe e₃ moins la section interne e₂ (I = e₃ - e₂), également comprise entre 100 et 300 µm.

Préférentiellement, le troisième matériau est plus ductile que le deuxième matériau de l'axe 27 afin que ce dernier ne se déforme pas lors du dudgeonnage. La partie intermédiaire 24 est préférentiellement métallique et peut ainsi comporter du nickel et/ou de l'or. Toutefois, tout autre matériau ductile peut avantageusement être ajouté au troisième matériau ou remplacer ce dernier.

Bien entendu, les trois premières étapes n'ont pas de consécutivité à respecter et peuvent même être réalisées en même temps.

Dans une quatrième étape, la partie intermédiaire 24 est introduite sans contact dans l'ouverture circulaire 28. Cela signifie comme visible à la figure 9 que le diamètre e₄ de l'ouverture circulaire 28 est plus grand ou égale à la section externe e₃ de la partie intermédiaire 24.

De manière préférée, la différence entre le diamètre e₄ de l'ouverture circulaire 28 et la section extérieure e₃ de la partie intermédiaire 24 est d'environ 10 µm, c'est-à-dire une épaisseur d'environ 5 µm qui sépare le corps 25 de la pièce 3 par rapport à la partie intermédiaire 24.

De plus, préférentiellement selon l'invention, la partie intermédiaire 24 est maintenue dans l'ouverture circulaire 28 à l'aide d'une portée 21 munie d'un perçage 25 de section e₁.

Enfin, le procédé comporte une cinquième étape consistant à dudgeonner élastiquement et/ou plastiquement la partie intermédiaire 24 par sa lumière 23 par un emmanchement de l'axe 27 selon la direction axiale A afin d'exercer une contrainte radiale B uniforme contre la paroi de l'ouverture circulaire 28 en sollicitant les moyens de déformation élastique de la pièce 3, c'est-à-dire les ajourages 26.

Ainsi, dans un premier temps, comme visible à la figure 10, du fait que la section e₆ de l'axe 27 est supérieure à la section e₂ de la partie intermédiaire, le passage de l'axe 27 (sa représentation est schématique) dans la lumière 23 selon la direction A va induire une déformation élastiquement et/ou plastique de la partie intermédiaire 24, laquelle se déforme exclusivement radialement selon la direction B par butée contre la portée 21.

De manière préférée selon l'invention, le dudgeonnage est paramétré afin que le serrage soit supérieure à l'interstice entre la partie intermédiaire 24 non déformée et la paroi de la pièce 3 autour de l'ouverture circulaire 28. Préférentiellement, le serrage est compris entre 8 et 20 µm.

Par conséquent, il est voulu que le dudgeonnage, après la déformation élastiquement et/ou plastique de la partie intermédiaire 24 dans le premier temps, exerce, dans un deuxième temps, la déformation élastique du corps 25 autour de l'ouverture circulaire 28 afin de solidariser ensemble l'axe 27, la partie intermédiaire 24 et la roue 3 comme visible à la figure 11. Cette déformation élastique autorise notamment un centrage automatique de l'ensemble axe 27 - partie intermédiaire 24. A ce titre, à la figure 11, on remarque que les ajourages 26 comportent une section référencée e₇ et non plus e₅.

Avantageusement selon l'invention, il est possible de chasser l'axe 27 de n'importe quel côté du corps 25 de la roue 3. De plus, aucun effort axial n'est appliqué sur le corps 25 de la roue 3 pendant le procédé. Seule une déformation élastique radiale est appliquée. Il est également à noter que l'utilisation de la partie intermédiaire 24 en forme de cylindre continu permet, lors de la déformation radiale B de la partie intermédiaire 24, d'exercer une contrainte uniforme sur la paroi du corps 25 autour de l'ouverture circulaire 28 afin d'éviter tout bris de la roue 3 en matériau fragile et s'adapter aux dispersions de fabrication des différents constituants.

Bien entendu, la présente invention ne se limite pas à l'exemple illustré mais est susceptible de diverses variantes et modifications qui apparaîtront à l'homme de l'art. En particulier, les ajourages de la pièce en matériau fragile peuvent comporter plus ou moins de série de trous que les modes de réalisation présentés ci-dessus.

Les figures 1 et 2 présentent des applications pour un système d'échappement tel que l'ancre 1 et la roue d'échappement 3 d'un mouvement horloger. Bien entendu, le présent assemblage 2, 12, 22 peut être appliqué à d'autres éléments. On peut, à titre d'exemple, envisager de former un spiral, un balancier, un pont ou plus généralement un mobile à l'aide d'un assemblage 2, 12, 22 comme expliqué ci-dessus.

Ainsi, comme illustré à la figure 12, il est possible de fixer un spiral 61 sur un axe 67 à l'aide d'un assemblage 62 selon l'invention. On pourrait alors former des ajourages 66 dans la virole 63 du spiral 61 et monter, dans l'ouverture 68 de la virole 63, une partie intermédiaire 64 de manière similaire aux explications ci-dessus.

Il est également possible d'utiliser l'assemblage 2, 12, 22, 62 en remplacement des moyens élastiques 48 ou des cylindres 63, 66 du document WO 2009/115463 (lequel est incorporé par référence à la présente description) afin de fixer un résonateur du type balancier - spiral monobloc sur un axe de pivotement.

Enfin, l'assemblage 2, 12, 22, 62 selon l'invention peut également permettre la solidarisation de tout type d'organe horloger ou non dont le corps est formé d'un matériau ne comportant pas de domaine plastique (silicium, quartz, etc.) avec un axe comme, par exemple, un résonateur du type diapason ou plus généralement un MEMS (acronyme provenant des termes anglais « Micro-Electro-Mechanical System »).

Bien entendu, deux organes tels que décrit ci-dessus peuvent également être assujettis sur le même axe à l'aide de deux assemblages distincts 2, 12, 22, 62 afin de solidariser leur mouvement respectif.

## Revendications

1. Dispositif d'assemblage (2, 12, 22, 62) d'un organe (7, 17, 27, 67) en un premier matériau dans l'ouverture circulaire (8, 18, 28, 68) d'une pièce (1, 3, 61) en un deuxième matériau à base de silicium à l'aide d'une partie intermédiaire (4, 14, 24, 64) en un troisième matériau montée entre ledit organe et ladite pièce la partie intermédiaire (4, 14, 24, 64) étant un cylindre continu comportant une lumière (23) destinée à recevoir ledit organe afin que la partie intermédiaire (4, 14, 24, 64) absorbe radialement (B) et uniformément par déformation élastique et/ou plastique au moins une partie de l'effort de chassage axial (A) dudit organe dans ladite lumière (23) **caractérisé en ce que** la pièce (1, 3, 61) comporte des ajourages (6, 16, 26, 26', 26", 26"', 46, 46', 66) formant des moyens de déformations élastiques distribués autour de son ouverture circulaire (8, 18, 28, 68) destinés à absorber lesdits efforts radiaux non absorbés par la partie intermédiaire (4, 14, 24, 64) afin de solidariser l'assemblage (2, 12, 22, 62) de manière non destructive pour ladite pièce.

2. Dispositif d'assemblage (2, 12, 22, 62) selon la revendication précédente, **caractérisé en ce que** les ajourages (6, 16, 26, 26', 26", 26"', 66) sont formés à distance et autour de l'ouverture circulaire (8, 18, 28, 68) par deux séries de trous (31, 33) en forme de losange distribuées en quinconce afin de former des poutres (32) réparties en V sécants.

3. Dispositif d'assemblage (2, 12, 22, 62) selon la revendication précédente, **caractérisé en ce que** les ajourages (26', 26", 26"') comportent, entre les deux premières séries (31, 33) et l'ouverture circulaire (8, 18, 28, 68), une troisième série qui est formée de trous (35) en forme de losange et distribuée en quinconce avec l'une (33) des deux premières séries afin de former des poutres (34) réparties en X sécants.

4. Dispositif d'assemblage (2, 12, 22, 62) selon la revendication précédente, **caractérisé en ce que** la pièce (1, 3, 61) comporte des fentes (36) permettant de faire communiquer la troisième série de trous (35) avec l'ouverture circulaire (8, 18, 28, 68).

5. Dispositif d'assemblage (2, 12, 22, 62) selon la revendication 1, **caractérisé en ce que** les ajourages (46, 46') sont formés à distance et autour de l'ouverture circulaire (8, 18, 28, 68) par une première série de trous (51) oblongs distribuée en quinconce avec une deuxième série de trous (53) de forme triangulaire, la deuxième série (53) étant la plus proche de l'ouverture circulaire (8, 18, 28, 68), chaque trou (53) de forme triangulaire communiquant avec l'ouverture circulaire (8, 18, 28) par une entaille (57) afin de former des poutres (52) mobiles radialement selon l'épaisseur des trous oblongs (51).

6. Dispositif d'assemblage (2, 12, 22, 62) selon la revendication précédente, **caractérisé en ce que** les ajourages (46') comportent une troisième série de trous (55) en forme de triangle, chaque trou (55) de la troisième série étant distribué entre deux trous (53) de forme triangulaire de la deuxième série et communiquant avec l'ouverture circulaire (8, 18, 28, 68) par une fente (56) afin de former des poutres (54) à deux bras indépendants mobiles radialement selon l'épaisseur des trous oblongs (51) et tangentiellement selon l'épaisseur des fentes (56).

7. Dispositif d'assemblage (2, 12, 22, 62) selon l'une des revendications précédentes, **caractérisé en ce que** les séries de trous (31, 33, 35, 51, 53, 55) s'étendent sur une largeur comprise entre 100 µm et 500 µm à partir du bord de l'ouverture circulaire (8, 18, 28, 68).

8. Dispositif d'assemblage (2, 12, 22, 62) selon l'une des revendications précédentes, **caractérisé en ce que** l'ouverture circulaire (8, 18, 28, 68) comporte un diamètre compris entre 0,5 et 2 mm.

9. Pièce d'horlogerie **caractérisée en ce qu'**elle comporte au moins un dispositif d'assemblage (2, 12, 22, 62) selon l'une des revendications précédentes.

10. Procédé d'assemblage par chassage axial d'un organe (7, 17, 27, 67) en un premier matériau dans une pièce (1, 3, 61) en un deuxième matériau à base de silicium ne comportant pas de domaine plastique comportant les étapes suivantes :
a) former la pièce (1, 3, 61) avec une ouverture circulaire (8, 18, 28, 68) et des ajourages (6, 16, 26, 26', 26", 26"', 46, 46', 66) distribués autour de l'ouverture circulaire (8, 18, 28, 68) destinés à former des moyens de déformation élastique ;
b) introduire sans contrainte dans l'ouverture circulaire (8, 18, 28, 68) une partie intermédiaire (4, 14, 24, 64) en un troisième matériau en forme de cylindre continu comportant une lumière (23) ;
c) dudgeonner élastiquement et/ou plastiquement la partie intermédiaire (4, 14, 24, 64) par sa lumière (23) à l'aide dudit organe afin d'exercer une contrainte radiale (B) uniforme contre la paroi de la pièce (1, 3, 61) autour de ladite ouverture circulaire (8, 18, 28, 68) en sollicitant lesdits moyens de déformation élastique de la pièce (1, 3, 61).

11. Procédé d'assemblage selon la revendication précédente, **caractérisé en ce que**, lors de l'étape b), la différence entre le diamètre (e₄) de l'ouverture circulaire (8, 18, 28, 68) et la section extérieure (e₃) de la partie intermédiaire (4, 14, 24, 64) est d'environ 10 µm.

12. Procédé d'assemblage selon la revendication 10 ou 11, **caractérisé en ce que**, lors de l'étape c), le dudgeonnage exerce un serrage compris entre 8 et 20 µm.

13. Procédé d'assemblage selon l'une des revendications 10 à 12, **caractérisé en ce que**, lors des étapes b) et c), la partie intermédiaire (4, 14, 24, 64) est maintenue dans l'ouverture circulaire (8, 18, 28, 68) à l'aide d'une portée (21).

14. Procédé d'assemblage selon l'une des revendications 10 à 13, **caractérisé en ce que** le deuxième matériau à base de silicium comporte du silicium, du quartz, du corindon ou de la céramique.

15. Procédé d'assemblage selon l'une des revendications 10 à 14, **caractérisé en ce que** le troisième matériau est formé à base de métal ou d'alliage métallique.

16. Procédé d'assemblage selon l'une des revendications 10 à 15, **caractérisé en ce que** la pièce est un mobile (3) d'horlogerie.

17. Procédé d'assemblage selon l'une des revendications 10 à 15, **caractérisé en ce que** la pièce est une ancre (1) d'horlogerie.

18. Procédé d'assemblage selon l'une des revendications 10 à 15, **caractérisé en ce que** la pièce est un spiral (61) d'horlogerie.

19. Procédé d'assemblage selon l'une des revendications 10 à 15, **caractérisé en ce que** la pièce est un résonateur.

20. Procédé d'assemblage selon l'une des revendications 10 à 15, **caractérisé en ce que** la pièce est un MEMS.

## Patentansprüche

1. Vorrichtung zur Verbindung (2, 12, 22, 62) eines Organs (7, 17, 27, 67) aus einem ersten Material in der kreisförmigen Öffnung (8, 18, 28, 68) eines Teils (1, 3, 61) aus einem zweiten Material auf der Basis von Silizium mit Hilfe eines Zwischenabschnitts (4, 14, 24, 64) aus einem dritten Material, der zwischen dem Organ und dem Teil angebracht wird, wobei der Zwischenabschnitt (4, 14, 24, 64) ein durchgehender Zylinder mit einer Öffnung (23) ist, die das Organ aufnehmen soll, damit der Zwischenabschnitt (4, 14, 24, 64) radial (B) und gleichmäßig durch elastische und/oder plastische Verformung mindestens einen Teil der axialen (A) Einpresskraft des Organs in der Öffnung (23) absorbiert, **dadurch gekennzeichnet, dass** das Teil (1, 3, 61) Durchbrüche (6, 16, 26, 26', 26", 26"', 46, 46', 66) umfasst, die Mittel für elastische Verformungen bilden, die um seine kreisförmige Öffnung (8, 18, 28, 68) verteilt sind, die dazu bestimmt sind, die radialen Kräfte zu absorbieren, die nicht durch den Zwischenabschnitt (4, 14, 24, 64) absorbiert werden, um die Verbindung (2, 12, 22, 62) in für das Teil zerstörungsfreier Weise zu festigen.

2. Vorrichtung zur Verbindung (2, 12, 22, 62) nach dem vorhergehenden Anspruch, **dadurch gekennzeichnet, dass** die Durchbrüche (6, 16, 26, 26', 26", 26"', 66) in einem Abstand von und um die kreisförmige Öffnung (8, 18, 28, 68) herum durch zwei Reihen von rautenförmigen Löchern (31, 33) ausgebildet sind, die versetzt verteilt sind, um Träger (32) auszubilden, die in V-Form sich schneidend verteilt sind.

3. Vorrichtung zur Verbindung (2, 12, 22, 62) nach dem vorhergehenden Anspruch, **dadurch gekennzeichnet, dass** die Durchbrüche (26', 26", 26"') zwischen den zwei ersten Reihen (31, 33) und der kreisförmigen Öffnung (8, 18, 28, 68) eine dritte Reihe umfassen, die aus rautenförmigen Löchern (35) ausgebildet ist und mit der einen (33) der zwei ersten Reihen versetzt verteilt ist, um Träger (34) auszubilden, die in X-Form sich schneidend verteilt sind.

4. Vorrichtung zur Verbindung (2, 12, 22, 62) nach dem vorhergehenden Anspruch, **dadurch gekennzeichnet, dass** das Teil (1, 3, 61) Schlitze (36) umfasst, die es ermöglichen, die dritte Reihe von Löchern (35) mit der kreisförmigen Öffnung (8, 18, 28, 68) zu verbinden.

5. Vorrichtung zur Verbindung (2, 12, 22, 62) nach Anspruch 1, **dadurch gekennzeichnet, dass** die Durchbrüche (46, 46') in einem Abstand von und um die kreisförmige Öffnung (8, 18, 28, 68) herum durch eine erste Reihe von länglichen Löchern (51), die mit einer zweiten Reihe von dreieckförmigen Löchern (53) versetzt verteilt sind, ausgebildet sind, wobei die zweite Reihe (53) am nächsten zur kreisförmigen Öffnung (8, 18, 28, 68) liegt, wobei jedes dreieckförmige Loch (53) mit der kreisförmigen Öffnung (8, 18, 28) durch einen Einschnitt (57) in Verbindung steht, um Träger (52) zu bilden, die entlang der Dickenabmessung der länglichen Löcher (51) radial beweglich sind.

6. Vorrichtung zur Verbindung (2, 12, 22, 62) nach dem vorhergehenden Anspruch, **dadurch gekennzeichnet, dass** die Durchbrüche (46') eine dritte Reihe von dreieckförmigen Löchern (55) umfassen, wobei jedes Loch (55) der dritten Reihe zwischen zwei dreieckförmigen Löchern (53) der zweiten Reihe verteilt ist und mit der kreisförmigen Öffnung (8, 18, 28, 68) durch einen Schlitz (56) in Verbindung steht, um Träger (54) mit zwei unabhängigen Armen zu bilden, die radial entlang der Dickenabmessung der länglichen Löcher (51) und tangential entlang der Dickenabmessung der Schlitze (56) beweglich sind.

7. Vorrichtung zur Verbindung (2, 12, 22, 62) nach einem der vorhergehenden Ansprüche, **dadurch gekennzeichnet, dass** die Reihen von Löchern (31, 33, 35, 51, 53, 55) sich auf einer Breite zwischen 100 µm und 500 µm vom Rand der kreisförmigen Öffnung (8, 18, 28, 68) erstrecken.

8. Vorrichtung zur Verbindung (2, 12, 22, 62) nach einem der vorhergehenden Ansprüche, **dadurch gekennzeichnet, dass** die kreisförmige Öffnung (8, 18, 28, 68) einen Durchmesser zwischen 0,5 und 2 mm umfasst.

9. Zeitmessgerät, **dadurch gekennzeichnet, dass** es mindestens eine Vorrichtung zur Verbindung (2, 12, 22, 62) nach einem der vorhergehenden Ansprüche umfasst.

10. Verbindungsverfahren durch axiales Einpressen eines Organs (7, 17, 27, 67) aus einem ersten Material in ein Teil (1, 3, 61) aus einem zweiten Material auf der Basis von Silizium, das keinen Kunststoffbereich aufweist, die folgenden Schritte umfassend:
a) Ausbilden des Teils (1, 3, 61) mit einer kreisförmigen Öffnung (8, 18, 28, 68) und Durchbrüchen (6, 16, 26, 26', 26", 26"', 46, 46', 66), die um die kreisförmige Öffnung (8, 18, 28, 68) verteilt sind, die dazu bestimmt sind, Mittel zur elastischen Verformung zu bilden;
b) spannungsfreies Einführen eines Zwischenabschnitts (4, 14, 24, 64) aus einem dritten Material in Form eines ununterbrochenen Zylinders mit einer Öffnung (23) in die kreisförmige Öffnung (8, 18, 28, 68);
c) elastisches und/oder plastisches Einwalzen des Zwischenabschnitts (4, 14, 24, 64) durch seine Öffnung (23) mit Hilfe des Organs, um eine gleichmäßige radiale Spannung (B) gegen die Wand des Teils (1, 3, 61) um die kreisförmige Öffnung (8, 18, 28, 68) herum durch Belasten der Mittel zur elastischen Verformung des Teils (1, 3, 61) auszuüben.

11. Verbindungsverfahren nach dem vorhergehenden Anspruch, **dadurch gekennzeichnet, dass** im Schritt b) die Differenz zwischen dem Durchmesser (e₄) der kreisförmigen Öffnung (8, 18, 28, 68) und dem äußeren Querschnitt (e₃) des Zwischenabschnitts (4, 14, 24, 64) ungefähr 10 µm ist.

12. Verbindungsverfahren nach Anspruch 10 oder 11, **dadurch gekennzeichnet, dass** im Schritt c) das Einwalzen eine Verdichtung zwischen 8 und 20 µm bewirkt.

13. Verbindungsverfahren nach einem der Ansprüche 10 bis 12, **dadurch gekennzeichnet, dass** in den Schritten b) und c) der Zwischenabschnitt (4, 14, 24, 64) in der kreisförmigen Öffnung (8, 18, 28, 68) mit Hilfe einer Auflagefläche (21) gehalten wird.

14. Verbindungsverfahren nach einem der Ansprüche 10 bis 13, **dadurch gekennzeichnet, dass** das zweite Material auf der Basis von Silizium Silizium, Quarz, Korund oder Keramik umfasst.

15. Verbindungsverfahren nach einem der Ansprüche 10 bis 14, **dadurch gekennzeichnet, dass** das dritte Material auf der Basis von Metall oder einer Metalllegierung ausgebildet ist.

16. Verbindungsverfahren nach einem der Ansprüche 10 bis 15, **dadurch gekennzeichnet, dass** das Teil ein Drehteil (3) einer Uhr ist.

17. Verbindungsverfahren nach einem der Ansprüche 10 bis 15, **dadurch gekennzeichnet, dass** das Teil ein Uhrenanker (1) ist.

18. Verbindungsverfahren nach einem der Ansprüche 10 bis 15, **dadurch gekennzeichnet, dass** das Teil eine Uhrenspiralfeder (61) ist.

19. Verbindungsverfahren nach einem der Ansprüche 10 bis 15, **dadurch gekennzeichnet, dass** das Teil ein Resonator ist.

20. Verbindungsverfahren nach einem der Ansprüche 10 bis 15, **dadurch gekennzeichnet, dass** das Teil ein MEMS ist.

## Claims

1. Assembly system (2, 12, 22, 62) of a member (7, 17, 27, 67) made of a first material in the circular aperture (8, 18, 28, 68) of a part (1, 3, 61) made of a second silicon-based material, using an intermediate part (4, 14, 24, 64) made of a third material mounted between said member and said part, **characterized in that** the intermediate part (4, 14, 24, 64) being a continuous cylinder comprising a hole (23) for receiving said member, so that the intermediate part (4, 14, 24, 64) absorbs, radially (B) and in a uniform manner, at least part of the axial driving force (A) of said member in said hole (23) by elastic and/or plastic deformation, **characterised in that** the part (1, 3, 61) includes pierced holes (6, 16, 26, 26', 26", 26"', 46, 46', 66) forming elastic deformation means distributed around the circular aperture (8, 18, 28, 68) thereof for absorbing any of said radial force not absorbed by the intermediate part (4, 14, 24, 64), in order to secure the assembly (2, 12, 22, 62) in a manner that is non-destructive for said part.

2. Assembly system (2, 12, 22, 62) according to the preceding claim, **characterized in that** the pierced holes (6, 16, 26, 26', 26", 26"', 66) are formed at a distance from and around the circular aperture (8, 18, 28, 68) by two series of diamond-shaped holes (31, 33) distributed in a quincunx arrangement so as to form beams (32) arranged in secant V-shapes.

3. Assembly system (2, 12, 22, 62) according to the preceding claim, **characterized in that** the pierced holes (26', 26", 26'") include, between the first two series (31, 33) and the circular aperture (8, 18, 28, 68), a third series which is formed of diamond-shaped holes (35) and arranged in a quincunx arrangement with one (33) of the first two series so as to form beams (34) distributed in secant X-shapes.

4. Assembly system (2, 12, 22, 62) according to the preceding claim, **characterized in that** the part (1, 3, 61) has slots (36) allowing the third series of holes (35) to communicate with the circular aperture (8, 18, 28, 68).

5. Assembly system (2, 12, 22, 62) according to claim 1, **characterized in that** the pierced holes (46, 46') are formed at a distance from and around the circular aperture (8, 18, 28, 68) by a first series of oblong holes (51) distributed in a quincunx arrangement with a second series of triangular holes (53), the second series (53) being the closest to the circular aperture (8, 18, 28, 68), each triangular hole (53) communicating with the circular aperture (8, 18, 28) via a notch (57) so as to form beams (52) that are radially moveable according to the thickness of the oblong holes (51).

6. Assembly system (2, 12, 22, 62) according to the preceding claim, **characterized in that** the pierced holes (46') include a third series of triangular holes (55), each hole (55) of the third series being arranged between two triangular holes (53) of the second series and communicating with the circular aperture (8, 18, 28, 68) via a slot (56) so as to form beams (54) with two independent arms that are moveable radially according to the thickness of the oblong holes (51) and tangentially according to the thickness of the slots (56).

7. Assembly system (2, 12, 22, 62) according to any of the preceding claims, **characterized in that** the series of holes (31, 33, 35, 51, 53, 55) extend over a width comprised between 100 µm et 500 µm from the edge of the circular aperture (8, 18, 28, 68).

8. Assembly system (2, 12, 22, 62) according to any of the preceding claims, **characterized in that** the diameter of the circular aperture (8, 18, 28, 68) is comprised between 0.5 and 2 mm.

9. Timepiece **characterized in that** it includes at least one assembly system (2, 12, 22, 62) according to any of the preceding claims.

10. Method of assembly wherein a member (7, 17, 27, 67) made of a first material is axially driven into a part (1, 3, 61) made of a second silicon-based material having no plastic domain, including the following steps:
a) forming the part (1, 3, 61) with a circular aperture (8, 18, 28, 68) and pierced holes (6, 16, 26, 26', 26", 26"', 46, 46', 66) distributed around the circular aperture (8, 18, 28, 68) to form elastic deformation means;
b) inserting an intermediate, continuous cylindrical part (4, 14, 24, 64), made of a third material and including a hole (23), into the circular aperture (8, 18, 28, 68) without any stress;
c) rolling and elastically and/or plastically expanding the intermediate part (4, 14, 24, 64) via the hole (23) therein using said member to exert uniform radial stress (B) against the wall of the part (1, 3, 61) around said circular aperture (8, 18, 28, 68) by using said elastic deformation means of the part (1, 3, 61).

11. Assembly method according to the preceding claim, **characterized in that**, in step b), the difference between the diameter (e₄) of the circular aperture (8, 18, 28, 68) and the external section (e₃) of the intermediate part (4, 14, 24, 64) is approximately 10 µm.

12. Assembly method according to claim 10 or 11, **characterized in that**, in step c), the rolling and expansion operation exerts a clamping displacement comprised between 8 et 20 µm.

13. Assembly method according to any of claims 10 to 12, **characterized in that**, in steps b) and c), the intermediate part (4, 14, 24, 64) is held in the circular aperture (8, 18, 28, 68) by using a shoulder (21).

14. Assembly method according to any of claims 10 to 13, **characterized in that** the second silicon-based material comprises silicon, quartz, corundum or ceramic.

15. Assembly method according to any of claims 10 to 14, **characterized in that** the third material is formed from a metal or metal alloy base.

16. Assembly method according to any of claims 10 to 15, **characterized in that** the part is a timepiece wheel (3).

17. Assembly method according to any of claims 10 to 15, **characterized in that** the part is timepiece pallets (1).

18. Assembly method according to any of claims 10 to 15, **characterized in that** the part is a timepiece balance spring (61).

19. Assembly method according to any of claims 10 to 15, **characterized in that** the part is a resonator.

20. Assembly method according to any of claims 10 to 15, **characterized in that** the part is a MEMS.
